# EUROPÄISCHE PATENTSCHRIFT

(11) **EP 4 154 059 B1**
(45) Veröffentlichungstag und Bekanntmachung des Hinweises auf die Patenterteilung: **10.06.2026**
(21) Anmeldenummer: 21810954.4
(22) Anmeldetag: 09.11.2021
(51) Int. Cl.: G02F 1/1333, G02F 1/1334, G02F 1/1345, G02F 1/155, B32B 17/10

(54) **ANORDNUNG, UMFASSEND EINEN FOLIENSCHICHTVERBUND**
ASSEMBLY, COMPRISING A LAMINAR FOIL COMPOSITE
DISPOSITIF COMPRENANT UN COMPOSITE DE FILMS MULTICOUCHE

(30) Priorität: 09.11.2020 DE 102020129494
(43) Veröffentlichungstag der Anmeldung: 29.03.2023
(73) Patentinhaber: Elkamet Kunststofftechnik GmbH, 35216 Biedenkopf (DE)
(72) Erfinder: DORSCHT, Igor, 35075 Gladenbach (DE); FRIES, Thorsten, 57072 Siegen (DE); PELICHET, Timothée, 35641 Schöffengrund (DE); KLEIN, Michael, 35116 Hatzfeld-Reddighausen (DE); SCHOCH, Andreas, 35037 Marburg (DE)
(74) Vertreter: DREISS Patentanwälte PartG mbB
(86) Internationale Anmeldenummer: PCT/EP2021/081129
(87) Internationale Veröffentlichungsnummer: WO 2022/096747

(56) Entgegenhaltungen:
- KR-B1- 102 085 206
- US-A1- 2004 053 125
- US-A1- 2020 081 310

## Beschreibung

Die Erfindung betrifft eine Anordnung mit den Merkmalen des des Patentanspruchs 1, wie sie ähnlich auch in folgender Patentschrift offenbart ist: KR 102 085 206 B1.

Ein ähnlicher Folienschichtverbund ist beispielsweise auch unter der Bezeichnung "Switchfoil" der Firma Switchfoil International (Switchfolie bv, Binnendelta 10b (BusinessPark 27), NL 1261WZ, Blaricum) bekannt. Solche Folienschichtverbünde sind auch als "schaltbare Folien" bekannt und dienen dazu, einen insbesondere transparenten Grundkörper, beispielsweise eine Fensterscheibe, wahlweise optisch abzudecken oder freizugeben. Beispielsweise kann zwischen einem Milchglaseffekt und einem durchsichtigen Zustand geschaltet werden.

Zwischen den beiden elektrischen Leitschichten des Folienschichtverbunds ist üblicherweise eine Wirkschicht angeordnet, deren optische Eigenschaften durch Veränderung einer angelegten Spannung veränderbar sind. Eine solche Wirkschicht weist beispielsweise veränderbar orientierbare, auf Veränderung einer angelegten Spannung reagierende Flüssigkristalle auf (sogenannte LCs oder PDLCs) und kann einen einschichtigen oder mehrschichtigen Aufbau aufweisen.

Im Rahmen der vorliegenden Erfindung können die mindestens zwei unterschiedlichen Lichtdurchlässigkeitszustände des Folienschichtverbunds unterschiedliche Trübungs-, Transparenz-und/oder Farbzustände des Folienschichtverbunds betreffen.

Es hat sich herausgestellt, dass der elektrische Anschluss und die Montage eines Folienschichtverbunds an oder auf einem transparenten Grundkörper viele teils schwierige Arbeitsschritte erfordert. Für ein zufriedenstellendes Ergebnis ist es entweder erforderlich, einen (teuren) Spezialisten heranzuziehen, oder ein Heimwerker muss viel Zeit und Mühe investieren, um sich in die Lage zu versetzen, den Folienschichtverbund selbst montieren und anschließen zu können. Gleichwohl erhöht ein fachmännisch montierter Folienschichtverbund den Gebrauchswert eines transparenten Grundkörpers erheblich, sodass ein vielfacher Einsatz von Folienschichtverbünden grundsätzlich erstrebenswert ist.

Hiervon ausgehend liegt der vorliegenden Erfindung die Aufgabe zugrunde, die Montage und den elektrischen Anschluss eines Folienschichtverbunds zu vereinfachen.

Diese Aufgabe wird durch eine Anordnung mit den Merkmalen des Patentanspruchs 1 gelöst.

Die erfindungsgemäße Anordnung stellt im Bereich des elektrischen Anschlusses des Folienschichtverbunds definierte Schnittstellen zu einer Kontaktleiste her. Die Kontaktleiste ermöglicht eine genaue Positionierung von zwei Kontaktabschnitten, welche ihrerseits mit jeweils einer Leitschicht des Folienschichtverbunds verbunden sind. Zu diesem Zweck sind in demselben Randabschnitt oder in unterschiedlichen Randabschnitten des Folienschichtverbunds unterschiedliche Leitschichten freigelegt, sodass die Leitschichten von den Kontaktabschnitten der Kontaktleiste - direkt oder unter Zwischenschaltung weiterer elektrisch leitender Elemente - elektrisch kontaktiert werden können.

Die Freilegung der Leitschichten in demselben Randabschnitt oder in jeweils unterschiedlichen Randabschnitten des Folienschichtverbunds kann in einfacher Weise unmittelbar bei der Herstellung des Folienschichtverbunds realisiert werden, indem in dem ersten Randabschnitt jene Schichten des Folienschichtverbunds, welche die erste Leitschicht auf zumindest einer oder auf genau einer Seite der ersten Leitschicht abdecken, ausgespart sind, und indem in dem ersten Randabschnitt oder in dem zweiten Randabschnitt jene Schichten des Folienschichtverbunds, welche die zweite Leitschicht auf zumindest einer oder auf genau einer Seite der zweiten Leitschicht abdecken, ausgespart sind. Auf diese Weise bleibt der grundsätzliche Schichtaufbau des Folienschichtverbunds erhalten; die Freilegung zumindest jeweils einer Seite der beiden Leitschichten ermöglicht es aber, diese unter Verwendung der Kontaktabschnitte der Kontaktleiste in besonders einfacher Art und Weise elektrisch kontaktieren zu können.

Die Kontaktleiste kann vorzugsweise ebenfalls direkt beim Hersteller des Folienschichtverbunds an dem Folienschichtverbund angeordnet werden, sodass deren Leitschichten in den freigelegten Bereichen elektrisch mit den Kontaktabschnitten der Kontaktleiste in Verbindung gebracht sind und in folgenden Teilen des Vertriebswegs die aus der Kontaktleiste und dem Folienschichtverbund bestehende Anordnung an Händler oder Endabnehmer weitergegeben werden kann. Diese Anordnung ist für Händler und/oder Endabnehmer vergleichsweise einfach handhabbar und montierbar, da der schwierigste Arbeitsschritt, nämlich die elektrische Kontaktierung des Folienschichtverbunds, bereits "herstellerseitig" erfolgt ist.

Die einfache Handhabung der Anordnung, welche die Kontaktleiste und den Folienschichtverbund umfasst, ermöglicht eine einfache und niedrigschwellige Nachrüstungsmöglichkeit für bestehende Einbausituationen, beispielsweise für die Nachrüstung eines Badezimmerfensters oder eines Möbelstücks, das transparente Flächen aufweist (beispielsweise eine Vitrine).

Es ist aber auch möglich, dass die erfindungsgemäße Anordnung auch einen transparenten Grundkörper umfasst, der über zumindest einen Teil seiner Erstreckung hinweg von dem Folienschichtverbund abgedeckt ist. Diese Anordnung kann also als Baueinheit, umfassend die Kontaktleiste, den Folienschichtverbund und den transparenten Grundkörper, bereitgestellt werden. Dies ermöglicht den einfachen Austausch eines konventionellen transparenten Grundkörpers gegen einen transparenten Grundkörper, der mit dem Folienschichtverbund abgedeckt ist, der wiederum elektrisch mit der Kontaktleiste verbunden ist.

Die erfindungsgemäße Anordnung kann alternativ auch hergestellt werden, indem zunächst der Folienschichtverbund auf einen Grundkörper aufgebracht und später die Kontaktleiste montiert wird. Die Freilegung der Leitschichten in dem ersten Randbereich und gegebenenfalls auch in dem zweiten Randbereich kann in diesem Fall vor oder nach dem Aufbringen des Folienverbunds auf den Grundkörper erfolgen.

Zur Verbindung der Kontaktleiste und des transparenten Grundkörpers kommen im Prinzip viele Möglichkeiten in Betracht. Besonders bevorzugt ist es jedoch, dass die Kontaktleiste und der Grundkörper miteinander verklebt sind. Zu diesem Zweck ist es möglich, dass an der Kontaktleiste ein Klebestreifen vorgehalten ist, der vorzugsweise mit einer Schutzfolie abgedeckt ist. Zur Montage der Kontaktleiste an dem Grundkörper kann die Schutzfolie entfernt und die Kontaktleiste auf den Grundkörper aufgeklebt werden.

In entsprechender Weise ist es bevorzugt, wenn die Kontaktleiste und der Folienschichtverbund miteinander verbunden sind. Auch hier ist eine bevorzugte Art der Verbindung eine Verklebung. Dies kann dadurch realisiert werden, dass die Kontaktleiste einen Klebestreifen trägt, der vorzugsweise mit einer Schutzfolie abgedeckt ist. Bei Montage und elektrischem Anschluss der Kontaktleiste an den Folienschichtverbund wird die Schutzfolie entfernt und die Kontaktleiste mit dem Folienschichtverbund verklebt.

Wenn die Kontaktleiste und der Folienschichtverbund nicht nur elektrisch miteinander verbunden sind, sondern auch mechanisch miteinander verbunden sind, vereinfacht sich auch die Handhabung des biegeschlaffen Folienschichtverbunds, nämlich dadurch, dass die Kontaktleiste weitestgehend biegestabil ist. Ein Hauptkörper der Kontaktleiste ist in vorteilhafter Weise aus einem elektrisch isolierenden Kunststoffmaterial hergestellt, beispielsweise durch Extrusion. Dieses Material verschafft der Kontaktleiste eine Grundstabilität und hat außerdem den Vorteil, als elektrischer Isolator zwischen den Kontaktabschnitten der Kontaktleiste wirksam zu sein.

Die Kontaktabschnitte können aus einem elektrisch leitfähigen Kunststoffmaterial oder aus einem metallischen Material gebildet sein. Es ist denkbar, dass die Kontaktabschnitte gemeinsam mit dem Hauptkörper der Kontaktleiste mittels Koextrusion hergestellt werden.

Besonders vorteilhaft ist es, wenn die Kontaktleiste und der Grundkörper gemeinsam eine U-förmige Begrenzung eines Aufnahmeraums zur Aufnahme eines sich parallel zu der Längserstreckung der Kontaktleiste erstreckenden Randbereichs des Folienschichtverbunds bilden. Dies geht damit einher, dass die Kontaktleiste und der Grundkörper in einfacher Weise miteinander gefügt werden können, und zwar unter Einschluss des Randbereichs des Folienschichtverbunds im Bereich des U-förmig begrenzten Aufnahmeraums. Anders ausgedrückt: im Querschnitt ist einer der Schenkel des "U"s durch die Kontaktleiste bereitgestellt und der andere Schenkel durch den Grundkörper. Dies bedeutet, dass die Kontaktleiste bezogen auf den Grundkörper von nur einer Seite aus mit einer Oberfläche des Grundkörpers fügbar ist, wobei der Randbereich des Folienschichtverbunds auf einer Seite von der Kontaktleiste und auf der gegenüberliegenden Seite von dem Grundkörper umklammert ist. Auf diese Weise kann auch eine besonders flachbauende Anordnung geschaffen werden.

Es ist ferner bevorzugt, dass die Kontaktflächen jeweils in Richtung des Grundkörpers weisen. Dies ermöglicht einen einfachen und funktionssicheren Aufbau der Kontaktleiste und eine einfache räumliche Trennung der Kontaktabschnitte.

Die erste Leitschicht weist vorzugsweise eine erste Anschlussfläche auf, die in Richtung auf den ersten Kontaktabschnitt weist. Somit können die erste Leitschicht und deren Anschlussfläche in einfacher Weise mit der Kontaktfläche des ersten Kontaktabschnitts gefügt werden.

Es ist möglich, dass die Kontaktfläche des ersten Kontaktabschnitts und die erste Anschlussfläche der ersten Leitschicht elektrisch unmittelbar miteinander in Kontakt stehen. Es ist aber auch möglich, dass zur Verbindung der ersten Anschlussfläche mit dem ersten Kontaktabschnitt ein erstes elektrisches Verbindungselement vorgesehen ist, das einen ersten Versatz zumindest teilweise ausgleicht, der sich auf die Richtung einer Dicke des Folienschichtverbunds bezieht.

Für die zweite Leitschicht ist es bevorzugt, wenn diese eine zweite Anschlussfläche aufweist, die in Richtung des Grundkörpers weist. Dies schafft die Möglichkeit, dass die zweite Leitschicht unter Beibehaltung einer äußeren Isolierschicht den ersten Kontaktabschnitt überdecken kann.

Zur Verbindung der zweiten Anschlussfläche mit dem zweiten Kontaktabschnitt ist es bevorzugt, wenn ein zweites elektrisches Verbindungselement vorgesehen ist, das einen zweiten Versatz ausgleicht, der sich auf eine Erstreckungsebene des Folienschichtverbunds bezieht. Ein solches Verbindungselement kann in einfacher Weise durch ein Leitblech oder eine zusätzliche Leitfolie bereitgestellt werden.

Es kann auch vorteilhaft sein, wenn die zweite Leitschicht eine zweite Anschlussfläche aufweist, die in Richtung auf den zweiten Kontaktabschnitt weist. Somit können die zweite Leitschicht und deren Anschlussfläche in einfacher Weise mit der Kontaktfläche des zweiten Kontaktabschnitts gefügt werden. Dies ermöglicht eine unmittelbare Kontaktierung, so dass auf ein zweites elektrisches Verbindungselement verzichtet werden kann.

Es ist ferner möglich, dass der Grundkörper auf einer der Kontaktleiste abgewandten Seite mit einer beispielsweise als Siebdruckbereich oder als Abdeck- oder Rahmenbauteil ausgeführten Sichtblende versehen ist. Auf diese Weise können die Kontaktabschnitte der Kontaktleiste, gegebenenfalls vorhandene Verbindungselemente und ein Randbereich des Folienschichtverbunds optisch überdeckt werden.

Ferner ist es bevorzugt, wenn die Kontaktleiste einen Befestigungsbereich zur lösbaren Befestigung einer Kabeldurchführung und/oder zur lösbaren Befestigung einer Abdeckblende aufweist. Die Kabeldurchführung dient dazu, eine externe elektrische Versorgung mit Anschlussbereichen der Kontaktleiste, die wiederum mit den Kontaktabschnitten in Verbindung stehen, zu verbinden. Eine Abdeckblende verbessert das optische Erscheinungsbild der Kontaktleiste.

Nach einer weiteren Ausführungsform der Erfindung weist die Kontaktleiste stromleitende Nieten auf, welche einenends mit jeweils einem der Kontaktabschnitte verbunden sind und anderenends einen Anschlussbereich zur zumindest mittelbaren Verbindung mit einer externen elektrischen Versorgung bilden. Dies ermöglicht eine einfache elektrische Verbindung von der Außenseite der Kontaktleiste her in Richtung auf die zu dem Folienschichtverbund benachbarten Kontaktabschnitte. Gleichzeitig können die Nieten dazu dienen, unterschiedliche Bauteile der Kontaktleiste, beispielsweise Materialabschnitte aus Kunststoff und elektrisch leitfähige Kontaktelemente, mechanisch miteinander zu verbinden.

Eine Anordnung gemäß Unteranspruch 14 ermöglicht es, unter Verwendung einer einzigen Kontaktleiste zwei (oder bei Bedarf auch weitere) Folienschichtverbünde gleichzeitig elektrisch anzuschließen. Zu diesem Zweck weist die Kontaktleiste einen dritten und einen vierten Kontaktabschnitt auf, die in vorstehend erläuterter Weise mit jeweiligen Leitschichten des zusätzlichen Folienschichtverbunds elektrisch verbunden sind. In entsprechender Weise können auch mehr als zwei Folienschichtverbünde elektrisch kontaktiert werden.

Zur Vereinfachung eines solches Aufbaus ist es möglich, dass der erste Kontaktabschnitt und der dritte Kontaktabschnitt durch ein gemeinsames Kontaktelement bereitgestellt sind, beispielsweise durch eine sich längs der Kontaktleiste erstreckende Leiterbahn. Ein solches gemeinsames Kontaktelement kann alternativ oder zusätzlich hierzu auch den zweiten Kontaktabschnitt und den vierten Kontaktabschnitt bereitstellen.

Weitere Merkmale und Vorteile der Erfindung sind Gegenstand der nachfolgenden Beschreibung und der zeichnerischen Darstellung bevorzugter Ausführungsbeispiele.

In der Zeichnung zeigt
- Fig. 1: eine Draufsicht einer Ausführungsform einer Anordnung mit einem Folienschichtverbund und einer Kontaktleiste;
- Fig. 2a: einen Querschnitt der Ausführungsform gemäß Fig. 1 auf Höhe einer in Fig. 1 mit II - II bezeichneten Schnittlinie;
- Fig. 2b: einen in Fig. 2a mit 2b bezeichneten Ausschnitt in vergrößerter Darstellung;
- Fig. 3a: einen Querschnitt der Ausführungsform gemäß Fig. 1 auf Höhe einer in Fig. 1 mit III - III bezeichneten Schnittlinie;
- Fig. 3b: einen in Fig. 3a mit 3b bezeichneten Ausschnitt in vergrößerter Darstellung;
- Fig. 4a: einen Querschnitt der Ausführungsform gemäß Fig. 1 auf Höhe einer in Fig. 1 mit IV - IV bezeichneten Schnittlinie;
- Fig. 4b: einen in Fig. 4a mit 4b bezeichneten Ausschnitt in vergrößerter Darstellung;
- Fig. 5: eine der Fig. 4a entsprechende Ansicht, wobei die Anordnung einen Grundkörper und eine optionale Sichtblende umfasst;
- Fig. 6: eine Explosionsdarstellung der Ausführungsform gemäß Fig. 1;
- Fig. 7: eine Explosionsdarstellung einer weiteren Ausführungsform, aus einer bezogen auf einen Grundkörper äußeren Perspektive;
- Fig. 8: eine Explosionsdarstellung der Ausführungsform gem. Fig. 6, aus einer bezogen auf den Grundkörper inneren Perspektive;
- Fig. 9: ein Detail der Ausführungsform gem. Fig. 6 in vergrößerter Darstellung;
- Fig. 10: einen Querschnitt einer weiteren Ausführungsform einer Anordnung mit einem Folienschichtverbund und einer Kontaktleiste;
- Fig. 11: eine alternative Ausgestaltung eines in Fig. 10 mit XI bezeichneten Ausschnitts; und
- Fig. 12 und 13: weitere Ausführungsformen unter Verwendung bezogen auf einen Folienschichtverbund stirnseitig angeordneter elektrischer Verbindungselemente.

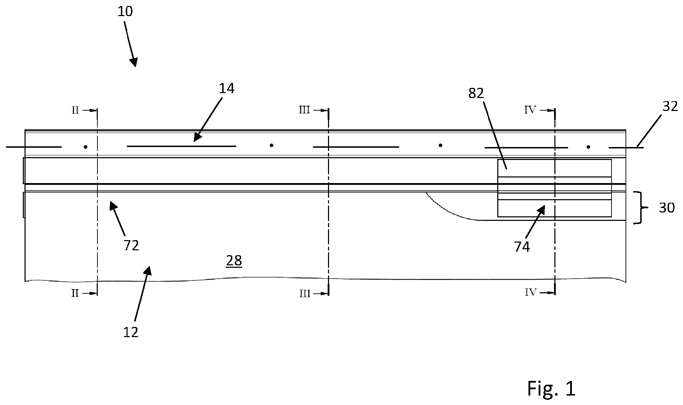

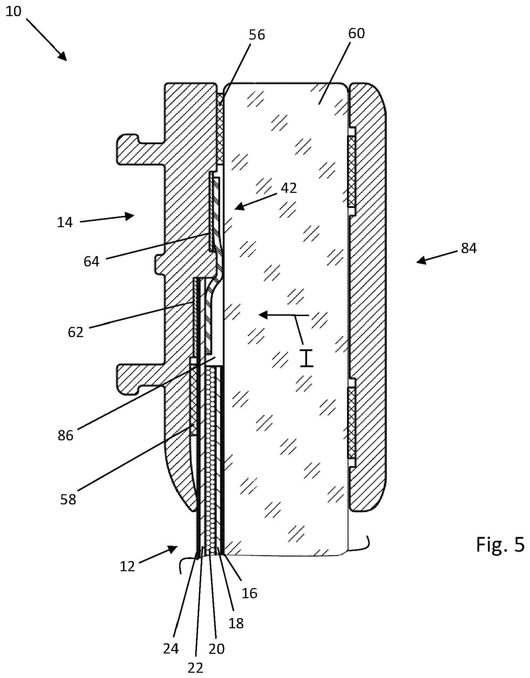

Die Figuren 1 bis 4b beziehen sich auf eine insgesamt mit dem Bezugszeichen 10 bezeichnete Anordnung, welche einen Folienschichtverbund 12 und eine Kontaktleiste 14 umfasst. Figur 1 zeigt die Innenseite einer solchen Anordnung, gemäß einer in Figur 5 mit I bezeichneten Sichtrichtung.

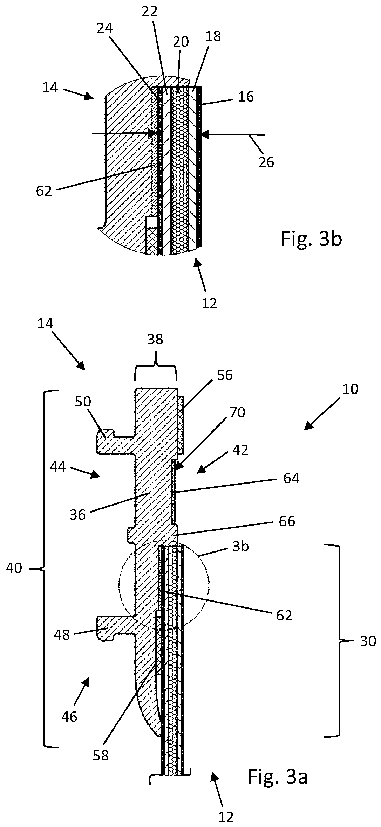

Der Folienschichtverbund 12 ist ein biegeschlaffer Verbund von fünf miteinander verbundenen Schichten. Dies sind, vergleiche insbesondere Figur 3b, in der nachstehend genannten Reihenfolge einander folgend: eine erste, außenliegende Isolierschicht 16, eine erste elektrische Leitschicht 18, eine optische Wirkschicht 20, eine zweite elektrische Leitschicht 22 und eine zweite, außenliegende Isolierschicht 24.

Die vorstehend genannten Schichten erstrecken sich über eine Dicke 26 hinweg, vgl. Figur 3b. Der Folienschichtverbund erstreckt sich mit dieser Dicke 26 über eine Erstreckungsebene 28 hinweg, vgl. Figur 1, dort parallel zur Zeichenebene.

Der Folienschichtverbund 12 weist einen Randbereich 30 auf, der sich parallel zu einer Längserstreckung 32 der Kontaktleiste 14 erstreckt.

Die Kontaktleiste 14 weist einen aus einem Kunststoffmaterial hergestellten Hauptkörper 36 auf, vgl. Figur 3a. Der Hauptkörper 36 weist eine in einem Querschnitt gemessene Höhe 38 und eine Breite 40 auf. Die Höhe 38 beträgt beispielsweise zwischen ungefähr 1,5 mm und ungefähr 15 mm. Die Breite 40 beträgt beispielsweise zwischen ungefähr 10 mm und ungefähr 90 mm. Vorzugsweise beträgt das Verhältnis zwischen Breite 40 und Höhe 38 mindestens 2:1, besonders bevorzugt mindestens 3:1.

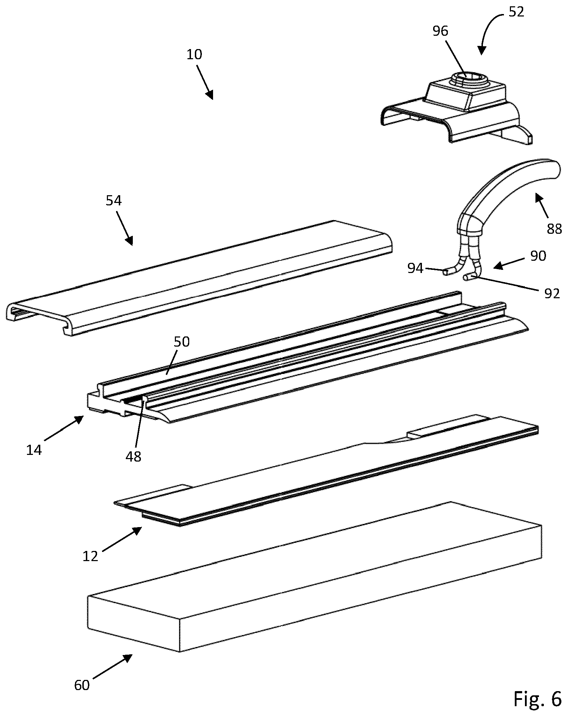

Der Hauptkörper 36 weist eine Innenseite 42 und eine Außenseite 44 auf. An der Außenseite 44 ist ein Befestigungsbereich 46 angeordnet, der beispielsweise zwei sich parallel zu der Längserstreckung 32 der Kontaktleiste 14 erstreckende, insbesondere schienenförmige Befestigungselemente 48 und 50 umfasst. Die Befestigungselemente 48, 50 dienen beispielsweise zur Befestigung einer in Figur 6 dargestellten Kabeldurchführung 52 und/oder zur Befestigung einer Abdeckblende 54.

Im Bereich der Innenseite 42 weist die Kontaktleiste 14 einen ersten Verklebungsabschnitt 56 und einen zweiten Verklebungsabschnitt 58 auf, vgl. Figur 3a. Die Verklebungsabschnitte 56 und 58 sind insbesondere als Klebestreifen ausgebildet, welche sich parallel zu der Längserstreckung 32 der Kontaktleiste 14 zumindest abschnittsweise erstrecken. Die Verklebungsabschnitte 56 und 58 sind in vorteilhafter Weise, bezogen auf die Breite 40, relativ zueinander möglichst weit beabstandet. Dabei dient der erste Verklebungsabschnitt 56 zur Verklebung mit einem transparenten Grundkörper 60, vgl. Figur 5. Der Verklebungsabschnitt 58 dient zur Verklebung mit dem Folienschichtverbund 12, beispielsweise mit einer der außenliegenden Isolierschichten 16, 24. Der Folienschichtverbund 12 deckt parallel zu seiner Erstreckungsebene 28 den Grundkörper 60 ab.

Bei dem Grundkörper 60 kann es sich beispielsweise um eine Fensterscheibe oder um einen insbesondere transparenten Abschnitt eines Möbelstücks handeln.

Die Kontaktleiste 14 weist ferner auf ihrer Innenseite 42 einen ersten Kontaktabschnitt 62 und einen hierzu beabstandet angeordneten zweiten Kontaktabschnitt 64 auf. Die Kontaktabschnitte 62 und 64 sind elektrisch leitfähig und können aus Schienen, Drähten oder Folien bestehen, die sich zumindest abschnittsweise parallel zu der Längserstreckung 32 der Kontaktleiste 14 erstrecken. Die Kontaktabschnitte 62 und 64 können aus metallischen Materialien, beispielsweise Aluminium oder Kupfer, hergestellt sein oder aus einem elektrisch leitfähigen Kunststoffmaterial, beispielsweise aus Polyanilin, oder aus einem mit leitfähigen Zusätzen versehenen Kunststoff.

Die Kontaktabschnitte 62 und 64 sind über einen in Höhenrichtung 38 der Kontaktleiste 14 hervorstehenden Materialvorsprung 66 voneinander getrennt.

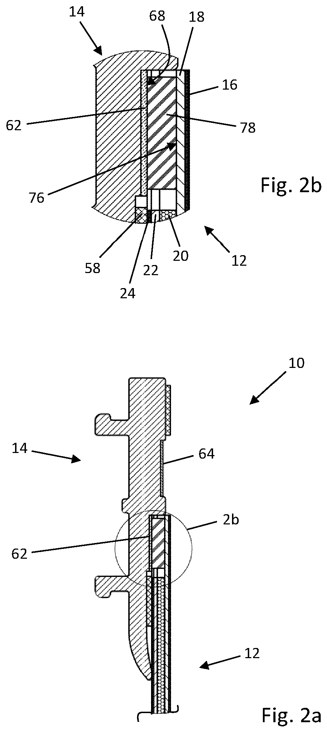

Die Kontaktabschnitte 62 und 64 liegen rückwärtig an dem Hauptkörper 36 der Kontaktleiste 14 an und sind dort mit dem Hauptkörper 36 verbunden. Die Kontaktabschnitte 62 und 64 weisen jeweilige nach außen weisende Kontaktflächen 68, 70 auf, vgl. Figur 3a und Figur 2b.

Der Folienschichtverbund 12 ist auf Höhe des in Fig. 1 mit III bezeichneten Querschnitts in dem Randbereich 30, vgl. auch Figuren 3a und 3b, so ausgestaltet, dass der Folienschichtverbund 12 in diesem Bereich sämtliche fünf Schichten 16 bis 24 aufweist. Dies ist in zwei bezogen auf die Längserstreckung 32 der Kontaktleiste 14 zueinander versetzt angeordneten Randabschnitten 72 und 74, vgl. Figur 1, nicht der Fall.

Im Bereich des ersten Randabschnitts 72, vgl. Figuren 2a und 2b, ist die erste elektrische Leitschicht 18 auf ihrer der optischen Wirkschicht 20 zugewandten Seite freigelegt. Mit anderen Worten: in dem ersten Randabschnitt 72 weist der Folienschichtverbund 12 in seinem Randbereich 30 keine optische Wirkschicht 20 und keine zweite elektrische Leitschicht 22 und keine zweite Isolierschicht 24 auf. Auf diese Weise ist eine in Richtung auf den ersten Kontaktabschnitt 62 weisende erste Anschlussfläche 76 der ersten Leitschicht 18 freigelegt/exponiert, sodass die erste Anschlussfläche 76 und die Kontaktfläche 68 des ersten Kontaktabschnitts 62 einander zugewandt sind und miteinander in Kontakt gebracht werden können. Dieser Kontakt kann unmittelbar sein oder aber, wie in Figur 2b dargestellt, unter Verwendung eines elektrischen Verbindungselements 78, das einen parallel zu der Richtung der Dicke 26 vorhandenen Versatz zwischen den Flächen 68 und 76 zumindest teilweise ausgleicht.

In vorteilhafter Weise erstreckt sich die erste Isolierschicht 16 in dem ersten Randabschnitt 72 über die gesamte Erstreckung der ersten Leitschicht 18 hinweg.

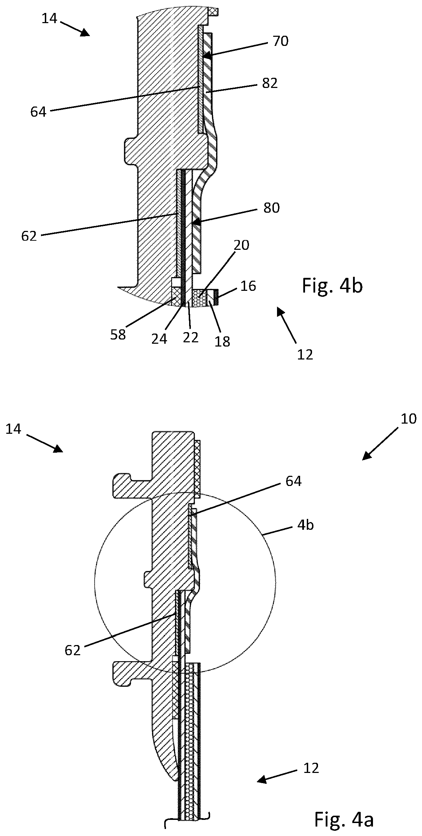

In dem zweiten Randabschnitt 74, vgl. Figuren 4a und 4b, ist abweichend von dem ersten Randabschnitt 72 nicht die erste Leitschicht 18, sondern die zweite Leitschicht 22 freigelegt. Mit anderen Worten: in dem Bereich des zweiten Randabschnitts 74 weist der Folienschichtverbund 12 auf Höhe des Randbereichs 30 die zweite elektrische Leitschicht 22 und die zweite Isolierschicht 24 auf, aber keine optische Wirkschicht 20, keine erste elektrische Leitschicht 18 und keine erste Isolierschicht 16. Auf diese Weise ist eine zweite Anschlussfläche 80 der zweiten Leitschicht 22 freigelegt/exponiert.

Die zweite Isolierschicht 24 erstreckt sich über den ersten Kontaktabschnitt 62 hinweg, sodass die zweite Leitschicht 22 im Bereich des ersten Kontaktabschnitts 62 von diesem isoliert ist.

Die zweite Anschlussfläche 80 weist in dieselbe Richtung wie die Kontaktfläche 70 des zweiten Kontaktabschnitts 64. Zur elektrischen Verbindung der genannten Flächen ist ein zweites elektrisches Verbindungselement 82 vorgesehen. Dieses gleicht einen parallel zu der Erstreckungsebene 28 des Folienschichtverbunds 12 vorhandenen Versatz zwischen den genannten Flächen aus.

Die in den Figuren 1 bis 4b dargestellte Anordnung 10 (umfassend den Folienschichtverbund 12 und die damit verbundene Kontaktleiste 14) kann von einem Hersteller eines Folienschichtverbunds 12 hergestellt werden. Diese Anordnung 10 kann dann, wie in Figur 5 dargestellt, an dem Grundkörper 60 montiert, insbesondere verklebt werden.

Falls gewünscht, kann die Innenseite 42 der Kontaktleiste 14, welche durch den Grundkörper 60 hindurch sichtbar ist, mittels einer Sichtblende 84 optisch überdeckt werden. Die Sichtblende 84 und die Kontaktleiste 14 sind auf voneinander abgewandten Seiten des Grundkörpers 60 angeordnet. In vorteilhafter Weise weist die Sichtblende 84 eine mit der Breite 40 der Kontaktleiste 14 korrespondierende Breite auf.

Wenn die Kontaktleiste 14 mit dem Grundkörper 60 verbunden ist, bilden diese Bauteile gemeinsam eine U-förmige Begrenzung eines Aufnahmeraums 86 aus, in welchem der Randbereich 30 des Folienschichtverbunds 12 aufgenommen ist, vgl. Figuren 1 und 5.

Zur Versorgung der Anordnung 10 mit elektrischer Energie kann beispielsweise ein Kabel 88 verwendet werden, das einen endseitigen Anschlussabschnitt 90 aufweist, vgl. Figur 6. Der Anschlussabschnitt 90 weist zwei elektrische Anschlüsse 92 und 94 auf, welche mit jeweils einem der Kontaktabschnitte 62 und 64 elektrisch verbunden werden oder sind. Eine solche Verbindung kann beispielsweise unmittelbar im Bereich einer stirnseitigen Begrenzung der Kontaktleiste 14 hergestellt werden, indem die Anschlüsse 92 und 94 jeweils einen der Kontaktabschnitte 62 und 64 berühren, was dadurch vereinfacht werden kann, dass die Kontaktabschnitte 62 und 64 in seitlicher Richtung über eine Stirnseite des Hauptkörpers 36 der Kontaktleiste 14 hervorstehen. Für den Fall eines solchen Überstands können die überstehenden Bereiche der Kontaktabschnitte 62 und 64 bei Bedarf auch um die Stirnseite des Hauptkörpers 36 herum gebogen werden und somit auf der Außenseite 44 des Hauptkörpers 36 von den Anschlüssen 92 und 94 kontaktiert werden.

Eine weitere Möglichkeit der elektrischen Kontaktierung der Kontaktabschnitte 62 und 64 besteht darin, den Hauptkörper 36 mit Aussparungen (beispielsweise stanzend hergestellt) zu versehen und die Anschlüsse 92 und 94 durch diese Aussparungen hindurch zu führen, um die Kontaktabschnitte 62 und 64 zu kontaktieren.

Für die mechanische Verbindung des Kabels 88 mit der Kontaktleiste 14 ist bevorzugt, wenn eine Kabeldurchführung 52 verwendet wird. Diese weist eine Öffnung 96 zum Durchtritt zumindest des Anschlussabschnitts 90 des Kabels 88 auf. Im Bereich der Kabeldurchführung 52 ist das Kabel 88 vorzugsweise reibschlüssig (zugentlastungswirksam) in der Öffnung 96 gehalten.

Zur mechanischen Verbindung der Kabeldurchführung 52 mit der Kontaktleiste 14 ist vorzugsweise eine lösbare Rastverbindung vorgesehen, insbesondere unter Verwendung der als Rastelemente ausgebildeten Befestigungselemente 48 und 50 der Kontaktleiste 14. Die Abdeckblende 54 kann in entsprechender Weise mit den Befestigungselementen 48 und 50 verrastet werden.

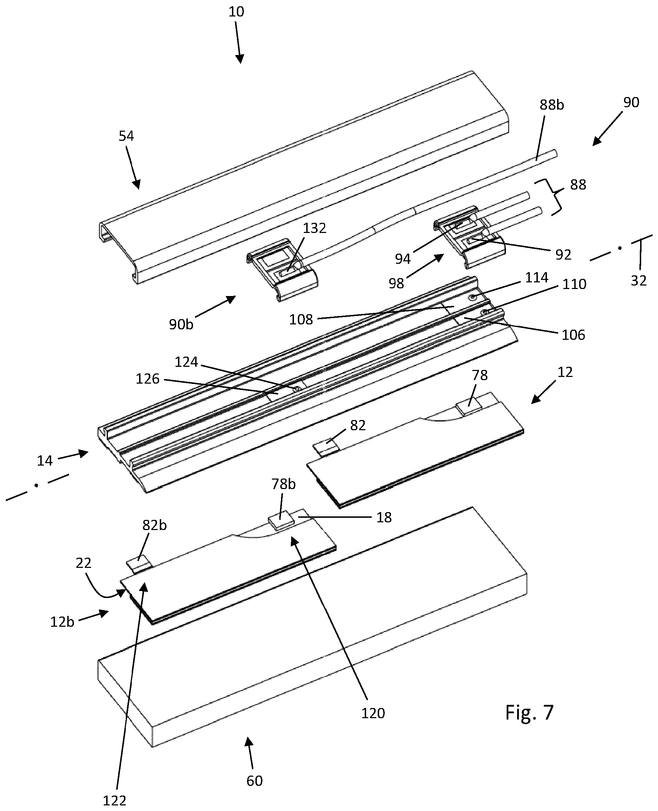

Nachfolgend wird unter Bezugnahme auf die Figuren 7 bis 9 ein weiteres Ausführungsbeispiel einer Anordnung 10 beschrieben. Anhand dieses Ausführungsbeispiels wird unter anderem auch eine weitere Möglichkeit zur elektrischen Verbindung des Anschlussabschnitts 90 des Kabels 88 mit den Kontaktabschnitten 62 und 64 erläutert. Diese unter Bezugnahme auf Figuren 7 bis 9 beschriebene elektrische Verbindungsmöglichkeit besteht auch bei der vorstehend unter Bezugnahme auf Figuren 1 bis 6 beschriebenen Ausführungsform.

Identische oder funktionsgleiche Bauteile der Ausführungsform gemäß Figuren 7 bis 9 tragen dieselben Bezugszeichen wie die Ausführungsform gemäß Figuren 1 bis 6.

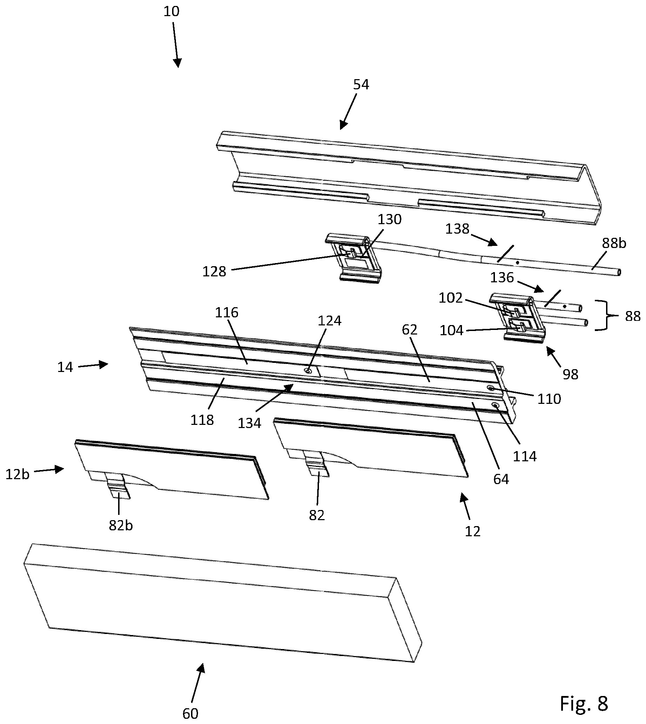

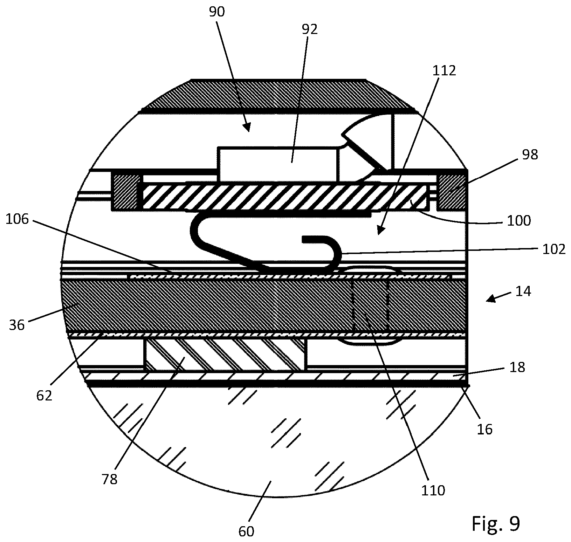

Zur elektrischen Verbindung des Anschlussabschnitts 90 sind die Anschlüsse 92 und 94 in einem elektrisch isolierenden Trägerteil 98 aufgenommen. Jeder der Anschlüsse 92, 94 ist über eine leitfähige Zwischenplatte 100, vgl. Figur 9, mit leitfähigen Federn 102, 104, vgl. Figuren 8 und 9, elektrisch verbunden. Die elektrische Verbindung der Federn 102, 104 zu der Kontaktleiste 14 erfolgt über auf der Außenseite der Kontaktleiste 14 angeordnete Hilfskontakte 106, 108, vgl. Figur 7.

Die Hilfskontakte 106, 108 erstrecken sich parallel zu dem Hauptkörper 36 der Kontaktleiste 14 und zumindest auf Höhe eines Abschnitts der jeweiligen Kontaktabschnitte 62, 64, vgl. Figur 9.

Zur Verbindung des Hilfskontakts 106 mit dem ersten Kontaktabschnitt 62 ist ein stromleitender Niet 110 vorgesehen, der den Hauptkörper 36 der Kontaktleiste 14 von der Außenseite zur Innenseite durchsetzt und mit jeweiligen Endbereichen den Hilfskontakt 106 und den ersten Kontaktabschnitt 62 elektrisch kontaktiert. Dabei bildet das dem Anschlussabschnitt 90 des Kabels 88 zugewandte Ende des Niets 110 einen Anschlussbereich 112 zur zumindest mittelbaren Verbindung mit einer externen elektrischen Versorgung.

Der zweite Kontaktabschnitt 64, vgl. Figur 8, ist in entsprechender Weise mittels eines Niets 114 und mittels des zweiten Hilfskontakts 108 elektrisch angeschlossen. Die Verbindung zu dem Anschluss 94 des Kabels 88 erfolgt über die Feder 104 und eine eigene Zwischenplatte, deren Aufbau der Zwischenplatte 100 entspricht.

Eine Besonderheit der Ausführungsform gemäß Figuren 7 bis 9 besteht darin, dass zusätzlich zu einem ersten Folienschichtverbund 12 ein zweiter Folienschichtverbund 12b vorgesehen ist, der insbesondere unabhängig von dem ersten Folienschichtverbund 12 geschaltet werden kann. Beide Folienschichtverbünde 12 und 12b werden mittels einer gemeinsamen Kontaktleiste 14 elektrisch kontaktiert. Für die Details der elektrischen Kontaktierung des zusätzlichen Folienschichtverbunds 12b wird auf die vorstehende Beschreibung Bezug genommen, insbesondere auf die Beschreibung zu den Figuren 2a, 2b und 4a, 4b.

Die beiden Folienschichtverbünde 12 und 12b erstrecken sich über zueinander versetzte, insbesondere zueinander benachbarte Bereiche des Grundkörpers 60. Zur elektrischen Kontaktierung des zweiten Folienschichtverbunds 12b weist die Kontaktleiste 14 einen dritten Kontaktabschnitt 116 und einen vierten Kontaktabschnitt 118 auf. Die Kontaktierung einer ersten elektrischen Leitschicht 18 des zweiten Folienschichtverbunds 12b mit dem dritten Kontaktabschnitt 116 erfolgt, insbesondere analog zu Figuren 2a, 2b, unter optionaler Verwendung eines ersten elektrischen Verbindungselements 78b. Die Verbindung zwischen dem vierten Kontaktabschnitt 118 und der zweiten elektrischen Leitschicht 22 des Folienschichtverbunds 12b erfolgt, insbesondere analog zu Figuren 4a und 4b, unter optionaler Verwendung eines zweiten elektrischen Verbindungselements 82b.

Die Kontaktierung des dritten Kontaktabschnitts 116 und des vierten Kontaktabschnitts 118 erfolgt in - bezogen auf die Längserstreckung 32 der Kontaktleiste 14 - zueinander versetzt angeordneten Randabschnitten 120, 122 des zweiten Folienschichtverbunds 12b, vgl. Figur 7.

Die elektrische Versorgung des Folienschichtverbunds 12b kann in zu dem Folienschichtverbund 12 identischer Weise erfolgen. Beispielsweise ist der dritte Kontaktabschnitt 116 mittels eines Niets 124 elektrisch angeschlossen, der mit einem Hilfskontakt 126 zusammenwirkt, der wiederum über eine Feder 128 und eine Zwischenplatte 130 mit einem Anschluss 132 eines zusätzlichen Kabels 88b mit elektrischer Energie versorgt werden kann. Diese Möglichkeit besteht auch für den vierten Kontaktabschnitt 118.

Es besteht jedoch die Möglichkeit, dass beispielsweise für den zweiten Kontaktabschnitt 64 und den vierten Kontaktabschnitt 118 ein gemeinsames Kontaktelement 134 verwendet wird, vgl. Figur 8. An dieses Kontaktelement 134 kann beispielsweise eine von "Null" abweichende Spannung angelegt werden, sodass die Lichtdurchlässigkeitszustände des ersten Folienschichtverbunds 12 durch Unterbrechung oder Herstellung einer elektrischen Verbindung zu dem ersten Kontaktabschnitt 62 (beispielsweise mittels eines in Fig. 8 schematisch dargestellten Schalters 136) und die Lichtdurchlässigkeitszustände des zweiten Folienschichtverbunds 12b durch Unterbrechung oder Herstellung einer elektrischen Verbindung zu dem dritten Kontaktabschnitt 116 (beispielsweise mittels eines in Fig. 8 schematisch dargestellten Schalters 138) geschaltet/gesteuert werden können.

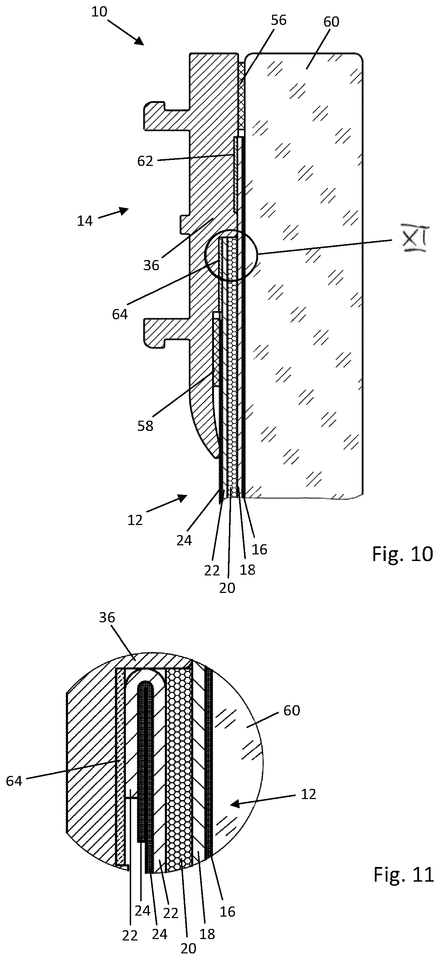

Eine in Fig. 10 dargestellte weitere Ausführungsform einer Anordnung 10 mit einem Folienverbund 12 und einer Kontaktleiste 14 kennzeichnet sich dadurch, dass die erste Leitschicht 18 zur insbesondere unmittelbaren Kontaktierung des ersten Kontaktabschnitts 62 und die zweite Leitschicht 22 zur insbesondere unmittelbaren Kontaktierung des zweiten Kontaktabschnitts 64 bezogen auf eine Längserstreckung der Kontaktleiste 14 (senkrecht zur Zeichenebene der Fig. 10) in demselben Randabschnitt des Folienverbunds 12 freigelegt sind. Dabei ist die Freilegung der Leitschichten 18, 22 so ausgeführt, dass die erste Anschlussfläche 76 der ersten Leitschicht 18 und die zweite Anschlussfläche 80 der zweiten Leitschicht 22 in Richtung auf die zugeordneten Kontaktabschnitte 62, 64 weisen. Im Übrigen wird auf die vorstehende Beschreibung zu Fig. 1 bis 9 Bezug genommen.

Fig. 11 zeigt eine alternative Kontaktierung des zweiten Kontaktabschnitts 64 der Anordnung 10 gemäß Fig. 10. Auf Höhe des zweiten Kontaktabschnitts 64 weist der Folienschichtverbund 12 einen Bereich auf, in welchem ein Randbereich der zweiten Leitschicht 22 und der zweiten Isolierschicht 24 derart um 180° umgeknickt ist, dass die zweite Isolierschicht 24 auf Höhe des zweiten Kontaktabschnitts 64 von dem Grundkörper 60 weg in Richtung auf die Kontaktfläche 70 des zweiten Kontaktabschnitts 64 weist und die zweite Leitschicht 22 direkt mit der Kontaktfläche 70 elektrisch verbunden werden kann oder ist.

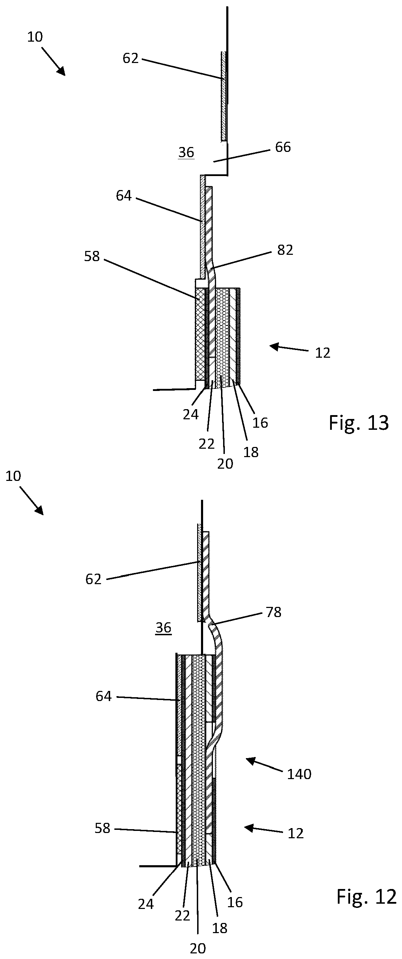

Fig. 12 zeigt eine Anordnung 10, bei welcher in einem zu einer Berandung des Folienschichtverbunds 12 beabstandeten Bereich eine Öffnung 140 in der ersten Isolierschicht 16 und in der ersten Leitschicht 18 eingebracht ist. Durch diese Öffnung 140 hindurch wird ein erstes Ende eines elektrischen Verbindungselements 78 eingebracht, das stirnseitig in direkten Kontakt mit einer Stirnseite der ersten Leitschicht 18 gebracht wird. Das freie Ende des elektrischen Verbindungselements 78 ist mit dem ersten Kontaktabschnitt 62 verbunden.

Das elektrische Verbindungselement 78 ist vorzugsweise mit der ersten Isolierschicht 16 und mit der optischen Wirkschicht 20 stoffschlüssig verbunden.

Die zweite elektrische Leitschicht 22 könnte in entsprechender Weise (also unter Verwendung einer der Öffnung 140 entsprechenden Öffnung in der zweiten Isolierschicht 24 und in der zweiten Leitschicht 22 und unter Verwendung eines elektrischen Verbindungselements 82) mit dem ersten Kontaktabschnitt 64 verbunden werden.

Fig. 13 zeigt eine Anordnung 10, bei welcher eine Stirnseite der zweiten Leitschicht 22 eines Folienschichtverbunds 12 im Vergleich zu benachbarten Stirnseiten der optischen Wirkschicht 20 und der zweiten Isolierschicht 24 nach innen zurückversetzt ist und dort an der Stirnseite eines elektrischen Verbindungselements 82 anliegt.

Zur Montage des zweiten elektrischen Verbindungselements 82 wird dieses zwischen die Isolierschicht 24 und die optische Wirkschicht 20 geschoben/gepresst. Die zweite Isolierschicht 24 kann dabei über die zweite Leitschicht 22 hervorstehen und zur Verbindung etwas angehoben werden. Das elektrische Verbindungselement 82 kann dabei mit der Isolierschicht 24 und der optischen Wirkschicht 20 stoffschlüssig verbunden, insbesondere verklebt, werden. Das freie Ende des Verbindungselements 82 wird mit dem zweiten Kontaktelement 64 verbunden. (In entsprechender Weise könnte die erste Leitschicht 18 mit dem ersten Kontaktelement 62 verbunden werden; die optische Wirkschicht 20, die erste Leitschicht 18 und die erste Isolierschicht 16 des Folienschichtverbunds 12 würden dann vorzugsweise zumindest soweit fortgeführt werden, dass diese an den Vorsprung 66 angrenzen. Die Schichten 20, 18, 16 müssen also nicht abgetrennt werden, wie in Fig. 13 dargestellt, sondern können sich auch über die in Fig. 13 dargestellte Berandung hinaus erstrecken.)

## Patentansprüche

1. Anordnung (10), umfassend einen Folienschichtverbund (12), der eine erste elektrische Leitschicht (18) und eine dazu beabstandete zweite elektrische Leitschicht (22) aufweist, wobei der Folienschichtverbund (12) elektrisch schaltbar mindestens zwei unterschiedliche Zustände, insbesondere Lichtdurchlässigkeitszustände oder Lichtemissionszustände, einnehmen kann, ferner umfassend eine Kontaktleiste (14) mit einem ersten Kontaktabschnitt (62) und mit einem zweiten Kontaktabschnitt (64), wobei in einem ersten Randabschnitt (72) des Folienschichtverbunds (12) die erste Leitschicht (18) zur Kontaktierung des ersten Kontaktabschnitts (62) freigelegt ist und wobei in dem ersten Randabschnitt (72) oder in einem zu dem ersten Randabschnitt (72) bezogen auf eine Längserstreckung (32) der Kontaktleiste (14) versetzt angeordneten zweiten Randabschnitt (74) des Folienschichtverbunds (12) die zweite Leitschicht (22) zur Kontaktierung des zweiten Kontaktabschnitts (64) freigelegt ist, wobei die Kontaktleiste (14) einen Hauptkörper (36) mit einer Innenseite (42) und mit einer Außenseite (44) aufweist, wobei der erste Kontaktabschnitt (62) und der zweite Kontaktabschnitt (64) mit dem Hauptkörper (36) verbunden sind, wobei der erste Kontaktabschnitt (62) und der zweite Kontaktabschnitt (64) zueinander beabstandet sind und rückwärtig an der Innenseite (42) des Hauptkörpers (36) der Kontaktleiste (14) anliegen und dort mit dem Hauptkörper (36) verbunden sind, wobei der erste Kontaktabschnitt (62) und der zweite Kontaktabschnitt (64) jeweils nach außen weisende Kontaktflächen (68, 70) aufweisen, und wobei die erste elektrische Leitschicht (18) von der Kontaktfläche (68) des ersten Kontaktabschnitts (62) und wobei die zweite elektrische Leitschicht (18) von der Kontaktfläche (70) des zweiten Kontaktabschnitts (64) - jeweils direkt oder unter Zwischenschaltung weiterer elektrisch leitender Elemente - elektrisch kontaktiert sind.

2. Anordnung (10) nach Anspruch 1, ferner umfassend einen insbesondere transparenten Grundkörper (60), der über zumindest einen Teil seiner Erstreckung hinweg von dem Folienschichtverbund (12) abgedeckt ist.

3. Anordnung (10) nach Anspruch 2, **dadurch gekennzeichnet, dass** die Kontaktleiste (14) und der Grundkörper (60) miteinander verbunden, insbesondere miteinander verklebt, sind.

4. Anordnung (10) nach einem der vorstehenden Ansprüche, **dadurch gekennzeichnet, dass** die Kontaktleiste (14) und der Folienschichtverbund (12) miteinander verbunden, insbesondere miteinander verklebt, sind.

5. Anordnung (10) nach einem der Ansprüche 2 bis 4, **dadurch gekennzeichnet, dass** die Kontaktleiste (14) und der Grundkörper (60) gemeinsam eine U-förmige Begrenzung eines Aufnahmeraums (86) zur Aufnahme eines sich parallel zu der Längserstreckung (32) der Kontaktleiste (14) erstreckenden Randbereichs (30) des Folienschichtverbunds (12) bilden.

6. Anordnung (10) nach einem der Ansprüche 2 bis 5, **dadurch gekennzeichnet, dass** die Kontaktflächen (68, 70) in Richtung des Grundkörpers (60) weisen.

7. Anordnung (10) nach einem der vorstehenden Ansprüche, **dadurch gekennzeichnet, dass** die erste Leitschicht (18) eine erste Anschlussfläche (76) aufweist, die in Richtung auf den ersten Kontaktabschnitt (62) weist.

8. Anordnung (10) nach Anspruch 7, **dadurch gekennzeichnet, dass** zur Verbindung der ersten Anschlussfläche (76) mit dem ersten Kontaktabschnitt (62) ein erstes elektrisches Verbindungselement (78) vorgesehen ist, das einen ersten Versatz zumindest teilweise ausgleicht, der sich auf die Richtung einer Dicke (26) des Folienschichtverbunds (12) bezieht.

9. Anordnung (10) nach einem der Ansprüche 2 bis 8, **dadurch gekennzeichnet, dass** die zweite Leitschicht (22) eine zweite Anschlussfläche (80) aufweist, die in Richtung auf den Grundkörper (60) oder in Richtung auf den ersten Kontaktabschnitt (62) weist.

10. Anordnung (10) nach Anspruch 9, **dadurch gekennzeichnet, dass** zur Verbindung der zweiten Anschlussfläche (80) mit dem zweiten Kontaktabschnitt (64) ein zweites elektrisches Verbindungselement (82) vorgesehen ist, das einen zweiten Versatz ausgleicht, der sich auf eine Erstreckungsebene (28) des Folienschichtverbunds (12) bezieht.

11. Anordnung (10) nach einem der Ansprüche 2 bis 10, **dadurch gekennzeichnet, dass** der Grundkörper (60) auf einer der Kontaktleiste (14) abgewandten Seite mit einer Sichtblende (84) versehen ist.

12. Anordnung (10) nach einem der vorstehenden Ansprüche, **dadurch gekennzeichnet, dass** die Kontaktleiste (14) einen Befestigungsbereich (46) zur lösbaren Befestigung einer Kabeldurchführung (52) und/oder zur lösbaren Befestigung einer Abdeckblende (54) aufweist.

13. Anordnung (10) nach einem der vorstehenden Ansprüche, **dadurch gekennzeichnet, dass** die Kontaktleiste (14) stromleitende Nieten (110) aufweist, welche einenends mit jeweils einem der Kontaktabschnitte (62, 64) verbunden sind und anderenends einen Anschlussbereich (112) zur zumindest mittelbaren Verbindung mit einer externen elektrischen Versorgung bilden.

14. Anordnung (10) nach einem der vorstehenden Ansprüche, **gekennzeichnet durch** einen zusätzlichen Folienschichtverbund (12b), der eine erste elektrische Leitschicht (18) und eine dazu beabstandete zweite elektrische Leitschicht (22) aufweist, wobei der zusätzliche Folienschichtverbund (12b) elektrisch schaltbar mindestens zwei unterschiedliche Lichtdurchlässigkeitszustände einnehmen kann, wobei die Kontaktleiste (14) einen dritten Kontaktabschnitt (116) und einen vierten Kontaktabschnitt (118) aufweist, wobei in einem ersten Randabschnitt (120) des zusätzlichen Folienschichtverbunds (12b) die erste Leitschicht (18) zur Kontaktierung des dritten Kontaktabschnitts (116) freigelegt ist und wobei in einem zu dem ersten Randabschnitt (120) bezogen auf die Längserstreckung (32) der Kontaktleiste (14) versetzt angeordneten zweiten Randabschnitt (122) des zusätzlichen Folienschichtverbunds (12b) die zweite Leitschicht (22) zur Kontaktierung des vierten Kontaktabschnitts (118) freigelegt ist.

15. Anordnung (10) nach Anspruch 14, **dadurch gekennzeichnet, dass** der erste Kontaktabschnitt (62) und der dritte Kontaktabschnitt (116) durch ein gemeinsames Kontaktelement bereitgestellt sind oder dass der zweite Kontaktabschnitt (64) und der vierte Kontaktabschnitt (118) durch ein gemeinsames Kontaktelement bereitgestellt sind.

16. Anordnung (10) nach einem der vorstehenden Ansprüche, **dadurch gekennzeichnet, dass** zwischen der ersten elektrischen Leitschicht (18) und der zweiten elektrischen Leitschicht (22) des Folienschichtverbunds (12) eine Wirkschicht (20) angeordnet ist, deren optische Eigenschaften durch Veränderung einer angelegten Spannung veränderbar sind.

17. Anordnung (10) nach einem der vorstehenden Ansprüche, **dadurch gekennzeichnet, dass** der Hauptkörper (36) biegestabil ist und/oder aus einem Kunststoffmaterial hergestellt ist.

18. Anordnung (10) nach einem der vorstehenden, **dadurch gekennzeichnet, dass** der Hauptkörper (36) als elektrischer Isolator zwischen dem ersten Kontaktabschnitt (62) und dem zweiten Kontaktabschnitt (64) wirksam ist.

## Claims

1. Arrangement (10) comprising a film laminar composite (12) having a first electrically conductive layer (18) and, spaced apart therefrom, a second electrically conductive layer (22), wherein the film laminar composite (12) can be electrically switched to occupy at least two different states, in particular light transmittance states or light emission states, further comprising a contact strip (14) having a first contact portion (62) and having a second contact portion (64), wherein, in a first edge portion (72) of the film laminar composite (12), the first conductive layer (18) is exposed for contacting the first contact portion (62) and wherein, in the first edge portion (72) or in a second edge portion (74) of the film laminar composite (12), which second edge portion is arranged offset with respect to the first edge portion (72) relative to a longitudinal extension (32) of the contact strip (14), the second conductive layer (22) is exposed for contacting the second contact portion (64), wherein the contact strip (14) has a main body (36) having an inner face (42) and an outer face (44), wherein the first contact portion (62) and the second contact portion (64) are connected to the main body (36), wherein the first contact portion (62) and the second contact portion (64) are spaced apart from one another and rest against the inner face (42) of the main body (36) of the contact strip (14) at the rear and are connected to the main body (36) there, wherein the first contact portion (62) and the second contact portion (64) each have outward facing contact surfaces (68, 70), and wherein the first electrically conductive layer (18) is electrically contacted by the contact surface (68) of the first contact portion (62) and wherein the second electrically conductive layer (18) is electrically contacted by the contact surface (70) of the second contact portion (64) - in each case directly or by insertion of further electrically conductive elements.

2. Arrangement (10) according to claim 1, further comprising a main part (60) which is in particular transparent and which is covered by the film laminar composite (12) over at least a part of the extension of the main part.

3. Arrangement (10) according to claim 2,
**characterized in that** the contact strip (14) and the main part (60) are connected to one another, in particular glued to one another.

4. Arrangement (10) according to any of the preceding claims, **characterized in that** the contact strip (14) and the film laminar composite (12) are connected to one another, in particular glued to one another.

5. Arrangement (10) according to any of claims 2 to 4,
**characterized in that** the contact strip (14) and the main part (60) together form a U-shaped delimitation of a receiving space (86) for receiving an edge region (30) of the film laminar composite (12), which edge region extends parallel to the longitudinal extension (32) of the contact strip (14).

6. Arrangement (10) according to any of claims 2 to 5,
**characterized in that** the contact surfaces (68, 70) face in the direction of the main part (60).

7. Arrangement (10) according to any of the preceding claims, **characterized in that** the first conductive layer (18) has a first connection surface (76) which faces in the direction of the first contact portion (62).

8. Arrangement (10) according to claim 7,
**characterized in that** a first electrical connecting element (78) is provided for connecting the first connection surface (76) to the first contact portion (62), which connecting element at least partially evens out a first misalignment relating to the direction of a thickness (26) of the film laminar composite (12).

9. Arrangement (10) according to any of claims 2 to 8, **characterized in that** the second conductive layer (22) has a second connection surface (80) which faces in the direction of the main part (60) or in the direction of the first contact portion (62).

10. Arrangement (10) according to claim 9,
**characterized in that** a second electrical connecting element (82) is provided for connecting the second connection surface (80) to the second contact portion (64), which connecting element evens out a second misalignment relating to an extension plane (28) of the film laminar composite (12).

11. Arrangement (10) according to any of claims 2 to 10, **characterized in that** the main part (60) is provided with a faceplate (84) on a face facing away from the contact strip (14).

12. Arrangement (10) according to any of the preceding claims, **characterized in that** the contact strip (14) has a fastening region (46) for detachably fastening a cable grommet (52) and/or for detachably fastening a cover plate (54).

13. Arrangement (10) according to any of the preceding claims, **characterized in that** the contact strip (14) has electrically conductive rivets (110) which at one end are each connected to one of the contact portions (62, 64) and at the other end form a connection region (112) for at least indirect connection to an external electrical supply.

14. Arrangement (10) according to any of the preceding claims, **characterized by** an additional film laminar composite (12b) comprising a first electrically conductive layer (18) and, spaced apart therefrom, a second electrically conductive layer (22), wherein the additional film laminar composite (12b) can be electrically switched to occupy at least two different light transmittance states, wherein the contact strip (14) has a third contact portion (116) and a fourth contact portion (118), wherein, in a first edge portion (120) of the additional film laminar composite (12b), the first conductive layer (18) is exposed for contacting the third contact portion (116) and wherein, in a second edge portion (122) of the additional film laminar composite (12b), which second edge portion is arranged offset with respect to the first edge portion (120) relative to the longitudinal extension (32) of the contact strip (14), the second conductive layer (22) is exposed for contacting the fourth contact portion (118).

15. Arrangement (10) according to claim 14,
**characterized in that** the first contact portion (62) and the third contact portion (116) are provided by a common contact element or **in that** the second contact portion (64) and the fourth contact portion (118) are provided by a common contact element.

16. Arrangement (10) according to any of the preceding claims, **characterized in that** an active layer (20) is arranged between the first electrically conductive layer (18) and the second electrically conductive layer (22) of the film laminar composite (12), the optical properties of which active layer can be changed by changing an applied voltage.

17. Arrangement (10) according to any of the preceding claims, **characterized in that** the main body (36) is flexurally stable and/or is made of a plastics material.

18. Arrangement (10) according to any of the preceding,
**characterized in that** the main body (36) acts as an electrical insulator between the first contact portion (62) and the second contact portion (64).

## Revendications

1. Dispositif (10), comprenant un composite de couches de film (12) qui comporte une première couche conductrice électrique (18) et, à distance de celle-ci, une deuxième couche conductrice électrique (22), le composite de couches de film (12) pouvant être électriquement commutable en au moins deux états différents, en particulier des états de transmission lumineuse ou des états d'émission lumineuse, comprenant en outre une barrette de contact (14) avec une première section de contact (62) et une deuxième section de contact (64), la première couche conductrice électrique (18) étant dégagée dans une première section de bord (72) du composite de couches de film (12) en vue de la mise en contact de la première section de contact (62) et la deuxième couche conductrice électrique (22) étant dégagée pour la mise en contact de la deuxième section de contact (64) soit dans la première section de bord (72), soit dans une deuxième section de bord (74) du composite de couches de film (12) disposée décalée par rapport à ladite première section de bord (72) en direction de l'extension longitudinale (32) de la barrette de contact (14), la barrette de contact (14) présentant un corps principal (36) avec une face interne (42) et une face externe (44), la première section de contact (62) et la deuxième section de contact (64) étant reliées au corps principal (36), ces sections de contact étant espacées l'une de l'autre et reposant postérieurement sur la face interne (42) du corps principal (36) de la barrette de contact (14) où elles sont fixées audit corps principal (36), la première section de contact (62) et la deuxième section de contact (64) présentant chacune des surfaces de contact (68, 70) orientées vers l'extérieur, et la première couche conductrice électrique (18) étant électriquement contactée depuis la surface de contact (68) de la première section de contact (62) et la deuxième couche conductrice électrique (18) étant électriquement contactée depuis la surface de contact (70) de la deuxième section de contact (64) - respectivement directement ou par l'intermédiaire d'autres éléments électriquement conducteurs.

2. Dispositif (10) selon la revendication 1, comprenant en outre un corps de base (60), notamment transparent, qui est recouvert par le composite de couches de film (12) sur au moins une partie de son étendue.

3. Dispositif (10) selon la revendication 2, **caractérisé en ce que** la barrette de contact (14) et le corps de base (60) sont reliés l'un à l'autre, notamment collés.

4. Dispositif (10) selon l'une quelconque des revendications précédentes, **caractérisé en ce que** la barrette de contact (14) et le composite de couches de film (12) sont reliés l'un à l'autre, notamment collés.

5. Dispositif (10) selon l'une quelconque des revendications 2 à 4, **caractérisé en ce que** la barrette de contact (14) et le corps de base (60) forment conjointement une délimitation en U d'un espace de réception (86) destiné à recevoir une zone de bord (30) du composite de couches de film (12) s'étendant parallèlement à l'extension longitudinale (32) de la barrette de contact (14).

6. Dispositif (10) selon l'une quelconque des revendications 2 à 5, **caractérisé en ce que** les surfaces de contact (68, 70) sont orientées en direction du corps de base (60).

7. Dispositif (10) selon l'une quelconque des revendications précédentes, **caractérisé en ce que** la première couche conductrice électrique (18) présente une première surface de connexion (76) orientée en direction de la première section de contact (62).

8. Dispositif (10) selon la revendication 7, **caractérisé en ce qu'**un premier élément de connexion électrique (78) est prévu pour relier la première surface de connexion (76) à la première section de contact (62), ledit élément compensant au moins partiellement un premier décalage se rapportant à la direction d'une épaisseur (26) du composite de couches de film (12).

9. Dispositif (10) selon l'une quelconque des revendications 2 à 8, **caractérisé en ce que** la deuxième couche conductrice électrique (22) présente une deuxième surface de connexion (80) orientée en direction du corps de base (60) ou en direction de la première section de contact (62).

10. Dispositif (10) selon la revendication 9, **caractérisé en ce qu'**un deuxième élément de connexion électrique (82) est prévu pour relier la deuxième surface de connexion (80) à la deuxième section de contact (64), ledit élément compensant un second décalage se rapportant à un plan d'étendue (28) du composite de couches de film (12).

11. Dispositif (10) selon l'une des revendications 2 à 10,
**caractérisé en ce que** le corps de base (60) est pourvu, sur la face éloignée de la barrette de contact (14), d'une visière (84).

12. Dispositif (10) selon l'une quelconque des revendications précédentes, **caractérisé en ce que** la barrette de contact (14) présente une zone de fixation (46) pour la fixation amovible d'un passe-câble (52) et/ou pour la fixation amovible d'un cache (54).

13. Dispositif (10) selon l'une quelconque des revendications précédentes, **caractérisé en ce que** la barrette de contact (14) présente des rivets conducteurs (110) qui, d'une part, sont reliés, par une de leurs extrémités, chacun à une des sections de contact (62, 64), et, d'autre part, forment une zone de connexion (112) pour la connexion au moins indirecte à une alimentation électrique externe.

14. Dispositif (10) selon l'une quelconque des revendications précédentes, **caractérisé par** un composite de couches de film additionnel (12b) qui comporte une première couche conductrice électrique (18) et une deuxième couche conductrice électrique (22) espacée par rapport à celle-ci, le composite additionnel (12b) électriquement commutable pouvant adopter au moins deux états de transmission lumineuse différents, la barrette de contact (14) comportant une troisième section de contact (116) et une quatrième section de contact (118), la première couche (18) étant dégagée dans une première section de bord (120) du composite additionnel (12b) pour la mise en contact de la troisième section de contact (116) et la deuxième couche (22) étant dégagée dans une deuxième section de bord (122) du composite additionnel (12b), disposée décalée par rapport à la première section de bord (120) par rapport à l'extension longitudinale (32) de la barrette de contact (14), pour la mise en contact de la quatrième section de contact (118).

15. Dispositif (10) selon la revendication 14, **caractérisé en ce que** la première section de contact (62) et la troisième section de contact (116) sont fournies par un même élément de contact ou que la deuxième section de contact (64) et la quatrième section de contact (118) sont fournies par un même élément de contact.

16. Dispositif (10) selon l'une quelconque des revendications précédentes, **caractérisé en ce que**, entre la première couche conductrice électrique (18) et la deuxième couche conductrice électrique (22) du composite de couches de film (12), est disposée une couche active (20) dont les propriétés optiques peuvent être modifiées par variation d'une tension appliquée.

17. Dispositif (10) selon l'une quelconque des revendications précédentes, **caractérisé en ce que** le corps principal (36) est résistant à la flexion et/ou est fabriqué en matériau plastique.

18. Dispositif (10) selon l'une quelconque des revendications précédentes, **caractérisé en ce que** le corps principal (36) agit comme isolant électrique entre la première section de contact (62) et la deuxième section de contact (64).
